# NEW EUROPEAN PATENT SPECIFICATION

(11) **EP 2 357 693 B2**
(45) Date of publication and mention of the opposition decision: **20.11.2024**
(45) Mention of the grant of the patent: 11.07.2018
(21) Application number: 09824871.9
(22) Date of filing: 09.11.2009
(51) Int. Cl.: H01M 4/36, H01M 4/58, H01M 4/505, H01M 4/525, C01B 25/45, C01G 53/00, H01M 10/052, B82Y 30/00

(54) **POSITIVE ELECTRODE FOR LITHIUM SECONDARY BATTERY, AND LITHIUM SECONDARY BATTERY**
POSITIVELEKTRODE FÜR EINE LITHIUM-SEKUNDÄRBATTERIE UND LITHIUM-SEKUNDÄRBATTERIE
ÉLECTRODE POSITIVE POUR BATTERIE SECONDAIRE AU LITHIUM ET BATTERIE SECONDAIRE AU LITHIUM

(43) Date of publication of application: 17.08.2011
(73) Proprietor: GS Yuasa International Ltd., Kisshoin, Minami-ku, Kyoto-shi, Kyoto 601-8520 (JP)
(72) Inventor: FUJII, Akihiro, Kyoto-shi Kyoto 601-8520 (JP); KASHIWA, Yuta, Kyoto-shi Kyoto 601-8520 (JP)
(74) Representative: Isarpatent
(86) International application number: PCT/JP2009/069046
(87) International publication number: WO 2010/053174

(56) References cited:
- WO-A1-2006/123572
- WO-A1-2009/057834
- JP-A- 2006 252 894
- JP-A- 2006 252 895
- JP-A- 2006 252 895
- JP-A- 2006 523 368
- JP-A- 2007 220 658
- JP-A- 2007 234 565
- JP-A- 2008 198 542
- JP-A- 2008 243 662
- JP-A- 2008 525 973
- US-A1- 2006 216 601
- US-A1- 2007 141 468
- US-A1- 2007 254 209
- US-A1- 2009 239 148

## Description

### TECHNICAL FIELD

The present invention relates to a positive electrode for a lithium secondary battery according to the preamble of claim 1 which is known from US 2006/216601 A1.

### BACKGROUND ART

JP 2006 252895 A also discloses such a positive electrode for a lithium secondary battery.

WO 2006/123572 A1 discloses a positive electrode for a lithium secondary battery which comprises a Li_{1.03}Co_{0.98}AL_{0.01}Mg_{0.01}O₂ and LiMn_{0.65}Fe_{0.35}PO₄, or Li_{1.02}Ni_{0.1}Co_{0.8}Mn_{0.1}O₂ and LiMgPO₄.

In recent years, as a power supply for portable devices such as mobile phones and laptop computers, electric vehicles, or the like, lithium secondary batteries, which have relatively high energy density, are less prone to self discharge, and have excellent cycle performance, have been attracting attention.

Conventionally, as lithium secondary batteries, small consumer batteries, mainly those having a battery capacity of not more than 2 Ah for mobile phones, are the mainstream. As positive active materials for the positive electrode of a small consumer lithium secondary battery, for example, lithium-containing transition metal oxides having an operating potential of around 4V, such as lithium cobalt oxide (LiCoO₂), lithium nickel oxide (LiNiO₂), and lithium manganese oxide (LiMn₂O₄) with a spinel structure, and the like are known. Above all, lithium-containing transition metal oxides have excellent charge-discharge performance and energy density. Accordingly, lithium cobalt oxide (LiCoO₂) has been widely adopted for small consumer lithium secondary batteries having a battery capacity up to 2 Ah.

Meanwhile, in future, it is required that lithium secondary batteries are made to be medium-sized or large-sized, so that the lithium secondary batteries are applied for industrial use, where particularly great demands are expected. Accordingly, the safety of lithium secondary batteries is regarded as extremely important.

However, when a positive active material for a conventional small consumer lithium secondary battery is directly applied to lithium secondary batteries for industrial use, the battery safety is not necessarily fully satisfied. That is, in a positive active material for a conventional small consumer lithium secondary battery, the thermal stability of a lithium-containing transition metal oxide is not necessarily sufficient. In response, various countermeasures have been taken to improve the thermal stability of a lithium-containing transition metal oxide. However, such countermeasures have not yet been too satisfactory.

Further, when a conventional small consumer lithium secondary battery is used in an environment where a small consumer lithium secondary battery has not yet been used, that is, in a high-temperature environment where a lithium secondary battery for industrial use may be used, the battery life is extremely shortened as in the case of a nickel-cadmium battery or a lead battery. Meanwhile, a capacitor serves as a product that can be used for a long period of time even in a high-temperature environment. However, a capacitor does not have sufficient energy density, and thus does not satisfy the users' needs. Therefore, there is a demand for a battery that has sufficient energy density while maintaining safety.

In response, as a positive active material for a lithium secondary battery, a polyanion positive active material with excellent thermal stability has been attracting attention. A polyanion positive active material is fixed by the covalent bond of oxygen to an element other than transition metals. Accordingly, a polyanion positive active material is unlikely to release oxygen even at a high temperature, and thus is expected to improve the safety of a lithium secondary battery.

As a polyanion positive active material, lithium iron phosphate (LiFePO₄) with an olivine structure has been actively studied. However, the theoretical capacity of lithium iron phosphate (LiFePO₄) has a relatively low value (170 mAh/g). Further, in such lithium iron phosphate, the insertion/extraction of lithium take place at a low potential of 3.4 V (vs. Li/Li⁺). Accordingly, the energy density of lithium iron phosphate is smaller compared with lithium-containing transition metal oxides. Thus, as polyanion positive active materials, lithium manganese iron phosphate (LiMnₓFe₍₁₋ₓ₎PO₄) or lithium manganese phosphate (LiMnPO₄) has been under consideration. They have Fe of lithium iron phosphate (LiFePO₄) partially or completely substituted with Mn, and thus have a reversible potential near 4 V (vs. Li/Li⁺).

However, lithium manganese iron phosphate or lithium manganese phosphate does not have sufficient electrical conductivity. Further, the lithium ion conductivity thereof is not sufficient either. Accordingly, the utilization ratio of the active material is relatively low. Further, high rate charge-discharge characteristics are insufficient.

Meanwhile, as a positive active material for a lithium secondary battery, for the purpose of improving the safety of a lithium secondary battery having a positive electrode that contains a lithium-containing transition metal oxide, a material obtained by mixing a lithium-containing transition metal oxide and a polyanion positive active material has been proposed (e.g., Patent Documents 1 to 7). This kind of positive active material can make battery safety higher than in the case of a positive active material made solely of a lithium-containing transition metal oxide. However, use of this kind of positive active material makes battery safety lower than in the case of using a positive active material made solely of a polyanion-based positive active material. In addition, there is also a problem in that the initial coulombic efficiency, which shows the ratio of the first discharge capacity to the first charge capacity, of this kind of positive active material is not necessarily satisfactory.

Patent Document 1: Japanese Patent No. 3632686
Patent Document 2: Japanese Patent Application Laid-Open (JP-A) No. 2001-307730
Patent Document 3: JP-A No. 2002-75368
Patent Document 4: JP-A No. 2002-216755
Patent Document 5: JP-A No. 2002-279989
Patent Document 6: JP-A No. 2005-183384
Patent Document 7: Translation of PCT application No. 2008-525973

### DISCLOSURE OF THE INVENTION

### PROBLEMS TO BE SOLVED BY THE INVENTION

Accordingly, there is a demand for a positive electrode for a lithium secondary battery, which contains a positive active material that is capable of, while maintaining the safety of a lithium secondary battery relatively high, improving the initial coulombic efficiency.

An object of the present invention is to provide a positive electrode for a lithium secondary battery, which is capable of, while maintaining the safety of a lithium secondary battery relatively high, improving the initial coulombic efficiency. It is expected that when the initial coulombic efficiency of a lithium secondary battery is improved, the energy density of the lithium secondary battery is improved.

### SOLUTIONS TO THE PROBLEMS

A positive electrode for a lithium secondary battery according to the present invention is defined in independent claim 1.

Further, in the positive electrode for a lithium secondary battery according the present invention, it is preferable that the mass ratio (A : B) between the lithium manganese iron phosphate (A) and the lithium-nickel-manganese-cobalt composite oxide (B) is 10 : 90 to 70 : 30.

A lithium secondary battery according to the present invention has a feature of having the positive electrode for a lithium secondary battery mentioned above, a negative electrode, and a nonaqueous electrolyte.

### EFFECTS OF THE INVENTION

The positive electrode for a lithium secondary battery according to the present invention has such an effect that it is capable of, while maintaining the safety of a lithium secondary battery relatively high, improving the initial coulombic efficiency.

### DESCRIPTION OF EMBODIMENTS

Hereinafter, an embodiment of the positive electrode for a lithium secondary battery according the present invention will be described.

A positive electrode for a lithium secondary battery according to this embodiment comprises lithium manganese iron phosphate and a lithium-nickel-manganese-cobalt composite oxide. Further, this positive electrode usually contains a conductive agent and a binder.

The lithium manganese iron phosphate and the lithium-nickel-manganese-cobalt composite oxide can perform the functions as a positive active material in the positive electrode for a lithium secondary battery.

The lithium manganese iron phosphate is a phosphate compound containing lithium atoms, manganese atoms, and iron atoms. Further, the lithium manganese iron phosphate has an olivine-type crystal structure classified into orthorhombic crystal, and is formed by manganese atoms and iron atoms being in solid solution with each other.

As the lithium manganese iron phosphate, it is preferable to use a compound represented by the following general formula (1):

LiMnₓFe₍₁₋ₓ₎PO₄ (0 < x <1) ... General Formula (1).

The compound represented by the general formula (1) may contain trace amounts of transition metal elements other than Mn and Fe or representative elements such as Al, for example, to the extent that the basic properties of the compound do no change. In this case, an element that is not represented by the above general formula (1) is contained in the lithium manganese iron phosphate. Besides, examples of the transition metal elements other than Mn and Fe include cobalt and nickel.

In the lithium manganese iron phosphate, the number of manganese atoms is more than 50% and less than 100%, and preferably more than 50% and not more than 80%, relative to the total of the number of manganese atoms and the number of iron atoms. That is, in the above general formula (1), it is preferable that 0.5 < x < 1 is satisfied, and it is more preferable that 0.5 < x ≤ 0.8 is satisfied.

In the positive electrode for a lithium secondary battery, the number of manganese atoms is more than 50% and less than 100%, and preferably more than 50% and not more than 80%, relative to the total of the number of manganese atoms and the number of iron atoms. As a result, the initial coulombic efficiency of a battery can be further improved. Further, it is preferable that the number of manganese atoms is more than 50% relative to the total of the number of manganese atoms and the number of iron atoms. As a result, the discharge potential can be raised. Further, the number of manganese atoms is preferably less than 100%, and more preferably not more than 90%. As a result, the electrode resistance does not become too high, whereby excellent high rate charge-discharge characteristics can be obtained.

As the lithium manganese iron phosphate, it is preferable that a particulate whose secondary particles have an average particle size of not more than 100 µm is used in the positive electrode for a lithium secondary battery. It is preferable that the average particle size of secondary particles of the particulate lithium manganese iron phosphate is 0.1 µm to 20 µm. It is preferable that the particle size of primary particles forming the secondary particles is 1 nm to 500 nm.

Besides, the average particle sizes of secondary particles and primary particles of the lithium manganese iron phosphate can be determined by image analysis of the results of transmission electron microscopic (TEM) observation.

The BET specific surface area of particles of the lithium manganese iron phosphate is preferably 1 to 100 m²/g, and more preferably 5 to 100 m²/g. As a result, the high-rate charge-discharge characteristics of the positive electrode can be improved.

In particles of the lithium manganese iron phosphate, it is preferable that carbon is supported on the surface of the particles. As a result, the electrical conductivity can be improved. The carbon may be provided in some parts of the surface of lithium manganese iron phosphate particles, or may also be provided to entirely coat the particles.

The lithium-nickel-manganese-cobalt composite oxide is an oxide containing lithium atoms, nickel atoms, manganese atoms, and cobalt atoms. Further, this composite oxide has an α-NaFeO₂-type crystal structure classified into hexagonal crystal, and is formed of nickel atoms, manganese atoms, and cobalt atoms being in solid solution with one another.

As the lithium-nickel-manganese-cobalt composite oxide, it is preferable to use a compound represented by the following general formula (2):

LiₐNi_{0.5-y}Mn_{0.5-z}Co_{y+z}O₂... General Formula (2)

(0 < a < 1.3, 0 < y < 0.5, 0 < z < 0.5, -0.1 ≤ y - z ≤ 0.1).

The compound represented by the general formula (2) may contain a slight amount of transition metal elements other than Mn, Ni, and Co or representative elements such as Al, for example, to the extent that the basic properties of the compound do no change. In this case, an element that is not represented by the above general formula (2) is contained in the lithium-nickel-manganese-cobalt composite oxide.

In the lithium-nickel-manganese-cobalt composite oxide, the number of cobalt atoms is more than 0% and not more than 67% relative to the total of the number of nickel atoms, the number of manganese atoms, and the number of cobalt atoms. That is, in the above general formula (2), it is that 0 < y + z ≤ 0.67 is satisfied.

When the number of cobalt atoms is more than 0% and not more than 67% relative to the total of the number of nickel atoms, the number of manganese atoms, and the number of cobalt atoms, the initial coulombic efficiency can be further improved.

Further, the number of cobalt atoms is preferably more than 10%, and more preferably not less than 30%, relative to the total of the number of nickel atoms, the number of manganese atoms, and the number of cobalt atoms. As a result, the electrode resistance in a battery does not become too high, whereby excellent high-rate charge-discharge characteristics are obtained. Further, the number of cobalt atoms is not more than 67%. As a result, the thermal stability of the positive electrode can be improved.

Further, in the composite oxide, the number of nickel atoms and the number of manganese atoms are preferably nearly equal in ratio, and more preferably the same.

As the lithium-nickel-manganese-cobalt composite oxide, it is preferable that a particulate whose secondary particles have an average particle size of not more than 100 µm is used in the positive electrode for a lithium secondary battery. The average particle size of secondary particles of the particulate lithium-nickel-manganese-cobalt composite oxide is preferably 0.1 µm to 100 µm, and more preferably 0.5 µm to 20 µm.

Besides, the average particle size of secondary particles of the lithium-nickel-manganese-cobalt composite oxide is measured as follows. That is, particles of the composite oxide and a surfactant are thoroughly kneaded. Subsequently, ion-exchange water is added to the mixture of the composite oxide particles and the surfactant. This mixture is then dispersed by ultrasonic irradiation. Then, using a laser diffraction/scattering particle size distribution measurement apparatus (device name: "SALD-2000J", manufactured by Shimadzu Corporation), the composite oxide particle size is measured at 20°C. As a result, the value of D₅₀ is obtained. This value is adopted as the average particle size of secondary particles of the composite oxide.

The BET specific surface area of particles of the lithium-nickel-manganese-cobalt composite oxide is preferably 0.1 to 10 m²/g, and more preferably 0.5 to 5 m²/g. As a result, the high-rate charge-discharge characteristics of the positive electrode can be improved.

With respect to the mixing ratio between the lithium manganese iron phosphate and the lithium-nickel-manganese-cobalt composite oxide, it is preferable that the mass ratio is such that lithium manganese iron phosphate : lithium-nickel-manganese-cobalt composite oxide = 10 : 90 to 70 : 30. A mass ratio within such a range is advantageous in that the initial coulombic efficiency of a battery is further improved.

It is preferable that the BET specific surface area of particles of the lithium manganese iron phosphate is larger than the BET specific surface area of particles of the lithium-nickel-manganese-cobalt composite oxide.

According to the invention the average particle size of particles of the lithium manganese iron phosphate is smaller than the average particle size of particles of the lithium-nickel-manganese-cobalt composite oxide. As a result, particles having different particle sizes are mixed, and thus the pack density of the positive electrode can be increased. Further, there is an advantage in that when a lithium-nickel-manganese-cobalt composite oxide with a larger particle size is used, the thermal stability of the positive electrode in the charged state can be improved. Further, when lithium manganese iron phosphate with a smaller particle size is used, the electron conduction path or Li ion diffusion path in the solid phase can be shortened. Accordingly, there is an advantage in that the high-rate charge-discharge characteristics of the lithium manganese iron phosphate can be greatly improved.

As the conductive agent and the binder, conventionally known ones can be used and added in ordinary amounts.

The conductive agent is not limited as long as it is an electron conductive material that is unlikely to adversely affect the battery performance. For example, it may be one kind or a mixture of electron conductive materials, such as natural graphite (flaky graphite, scaly graphite, earthy graphite, etc.), artificial graphite, carbon black, acetylene black, ketjen black, carbon whisker, carbon fiber, and electrically conductive ceramic materials.

The binder may be, for example, one single kind or a mixture of two or more kinds of polymers having rubber elasticity, such as polytetrafluoroethylene (PTFE), polyvinylidene fluoride (PVDF), polyethylene, polypropylene, and like thermoplastic resins, ethylene-propylene-dieneterpolymer (EPDM), sulfonated EPDM, styrene butadiene rubber (SBR), and fluoro-rubber.

ICP analysis can be used to confirm that the lithium manganese iron phosphate or the lithium-nickel-manganese-cobalt composite oxide contains lithium atoms, manganese atoms, iron atoms, phosphorus atoms, nickel atoms, cobalt atoms, etc., as well as their contents. Further, X-ray diffraction analysis (XRD) of the particles or electrodes can be used to confirm that the metal atoms are in solid solution with one another in the lithium manganese iron phosphate or the lithium-nickel-manganese-cobalt composite oxide, and also that they have an olivine-type or α-NaFeO₂-type crystal structure. Further, more detailed analysis can be performed by transmission electron microscopy (TEM) observation, scanning electron microscopic X-ray analysis (EPMA), high-resolution analytic electron microscope (HRAEM), etc.

Besides, in the positive electrode for a lithium secondary battery, the positive active material may contain impurities that are intentionally added for the purpose of improving various properties of the positive active material.

Next, a method for producing the positive electrode for a secondary battery according to this embodiment will be described.

The positive electrode for a secondary battery mentioned above can be produced through the following processes, for example. That is, first, particles of the lithium manganese iron phosphate and particles of the lithium-nickel-manganese-cobalt composite oxide are separately synthesized. Subsequently, a paste containing these particles is produced. The paste is applied onto a current collector, and the paste is then dried.

A method for synthesizing the lithium manganese iron phosphate is not particularly limited. In accordance with the composition ratio of lithium manganese iron phosphate in the positive active material after synthesis, a raw material that contains metal elements (Li, Mn, Fe) and a raw material that serves as a phosphoric acid source are mixed. Then, the mixture is calcined to give lithium manganese iron phosphate.

As the method for synthesizing the lithium manganese iron phosphate, specifically, the following solid-phase method and liquid-phase method can be adopted, for example. In the solid-phase method, for example, a particulate raw material that contains metal elements (Li, Mn, Fe) and a particulate raw material that serves as a phosphoric acid source are mixed. Then, the particulate raw material mixture obtained by mixing is calcined. In the liquid-phase method, for example, lithium manganese iron phosphate is synthesized from an aqueous solution containing a raw material that contains metal elements (Li, Mn, Fe) and a raw material that serves as a phosphoric acid source. As such a liquid-phase method, a sol-gel method, a polyol method, a hydrothermal method, or the like can be adopted.

In the synthesis of the lithium manganese iron phosphate, it is preferable that carbon is mechanically deposited to the surface of lithium manganese iron phosphate particles or that the surface is mechanically covered with carbon. As a result, the electrical conductivity of lithium manganese iron phosphate can be improved. Alternatively, it is also preferable that the deposition of carbon or the covering with carbon is performed by the pyrolysis of an organic substance, etc.

It is preferable that the lithium-nickel-manganese-cobalt composite oxide is synthesized in such a manner that the 6a site, 6b site, and 6c site of the α-NaFeO₂ structure are occupied neither too much nor too little by Li, by Ni, Mn, and Co, and by O, respectively. However, such an occupation state is not necessity.

In the synthesis of the lithium-nickel-manganese-cobalt composite oxide, because, for example, a portion of Li source may be volatilized during calcining, the composition of the synthesized composite oxide may be slightly different from the composition calculated from the preparative composition ratio of raw materials. In order for the composition ratio of the synthesized composite oxide to approximate to the preparative composition ratio of raw materials, it is preferable that in the synthesis of the composite oxide, a larger amount of Li source is prepared and calcined.

In the synthesis of the lithium-nickel-manganese-cobalt composite oxide, a solid-phase method can be adopted. In the solid-phase method, a Ni compound, a Mn compound, and a Co compound as raw materials are mixed with a Li compound and calcined. Alternatively, it is possible to adopt a method in which a co-precipitated precursor (the below-mentioned Ni-Mn-Co coprecipitated precursor), which is prepared by coprecipitation by a reaction of an aqueous solution having a Ni compound, a Mn compound, and a Co compound dissolved therein, is mixed with a Li compound and calcined. Above all, it is preferable to adopt the method in which a coprecipitated precursor (the below-mentioned Ni-Mn-Co coprecipitated precursor) prepared by coprecipitation is mixed with a Li compound and calcined. Use of such a method makes it possible to synthesize a more homogeneous composite oxide.

As a method for preparing the Ni-Mn-Co coprecipitated precursor, it is preferable to adopt a coprecipitation process, in which an acidic aqueous solution of Ni, Mn, and Co is precipitated using an aqueous alkali solution such as an aqueous sodium hydroxide solution. According to this method, Ni, Mn, and Co are uniformly mixed in the prepared Ni-Mn-Co coprecipitated precursor.

When the coprecipitation process is adopted as a method for preparing the Ni-Mn-Co coprecipitated precursor mentioned above, the mixed state of Ni, Mn, and Co in a coprecipitated precursor is homogeneous. As a result, even when the extraction/insertion of Li occurs upon the charge-discharge of a battery, the crystal structure in the positive active material can be stable. Therefore, a lithium secondary battery using a lithium-nickel-manganese-cobalt composite oxide obtained through the coprecipitated precursor can have excellent battery performance.

In the coprecipitation process, it is preferable that the core of crystal growth is produced in the presence of more moles of ammonium ions than the total moles of Ni, Mn, and Co metal ions. As a result, homogeneous and bulky coprecipitated precursor particles can be prepared. When ammonium ions are present in excess like this, the precipitation reaction goes through a reaction that forms a metal-ammine complex. As a result, the rate of the precipitation reaction is relaxed. Therefore, there is an advantage in that a precipitate that has excellent crystal orientation, is bulky, and contains grown primary particle crystals can be produced. Incidentally, when no ammonium ions are present, those metal ions will rapidly form a precipitate due to an acid-base reaction. Accordingly, the crystal orientation is likely to be disorderly, whereby a precipitate with insufficient bulk density may be formed.

In the coprecipitation process, the particle shape of coprecipitated precursor particles, as well as physical properties such as bulk density and surface area can be controlled by suitably adjusting various factors, such as apparatus factors including the configuration of the reactor and the kind of rotor blade, the duration of remaining a precipitate in the reaction vessel, the temperature of reaction vessel, the total amount of ions, the pH of solution, the concentration of ammonia ions, the concentration of oxidation number regulator, etc.

The calcining method in the synthesis of the lithium manganese iron phosphate is not particularly limited. Specifically, for example, a method in which calcining is performed at 400 to 900°C, preferably 500 to 800°C, for 1 to 24 hours is preferable.

The calcining method in the synthesis of the lithium-nickel-manganese-cobalt composite oxide is not particularly limited. Specifically, for example, a method in which calcining is performed at 700 to 1100°C, preferably 800 to 1000°C, for 1 to 24 hours is preferable.

In a method for producing the positive electrode for a secondary battery, a mill and a classifier may be used in order to obtain particles of lithium manganese iron phosphate or a lithium-nickel-manganese-cobalt composite oxide with a predetermined shape.

As the mill, for example, a mortar, a ball mill, a sand mill, a vibrating ball mill, a planetary ball mill, a jet mill, a counterjet mill, a swirling-flow-type jet mill, or the like can be used. At the time of milling, wet milling may be adopted, where an organic solvent, such as an alcohol or hexane, or water is allowed to coexist.

As the classifier, a sieve, an air classifier, or the like can be used. The classification method is not particularly limited, and a dry method using a sieve, an air classifier, or the like or a wet method can be adopted.

The paste is obtained by mixing particles of lithium manganese iron phosphate or a lithium-nickel-manganese-cobalt composite oxide with a solvent. The solvent is not particularly limited. For example, organic solvents such as N-methyl-2-pyrrolidone (NMP), toluene, and alcohols, and water, and the like are usable.

Examples of materials for the current collector include aluminum, calcined carbon, conductive polymers, and conductive glass. Above all, aluminum is preferable.

The current collector may be in the form of a sheet, a net, or the like. Further, the thickness of the current collector is not particularly limited, and a thickness of 1 to 500 µm is usually adopted.

As a method for applying the paste to the current collector, roller coating using an applicator roll or the like, screen coating, blade coating, spin coating, bar coating, or the like can be adopted. However, the method is not limited thereto.

The moisture content contained in the positive electrode is more preferably lower. Specifically, it is preferable that the content is less than 1000 ppm. As a method for reducing the moisture content, a method where the positive electrode is dried in a high-temperature/reduced-pressure environment or a method where the moisture contained in the positive electrode is electrochemically decomposed is preferable.

Subsequently, one embodiment of a lithium secondary battery according to the invention will be described.

The lithium secondary battery of this embodiment at least comprises the positive electrode for a lithium secondary battery mentioned above, a negative electrode, and a nonaqueous electrolyte obtained by adding an electrolyte salt to a nonaqueous solvent. Further, the lithium secondary battery comprises a separator between the positive electrode and the negative electrode, and also comprises an exterior body for packaging the positive electrode, the negative electrode, the nonaqueous electrolyte, and the separator.

Materials for the negative electrode are not particularly limited. Examples of such materials include metallic lithium and lithium alloys (lithium-metal-containing alloys such as lithium-aluminum, lithium-lead, lithium-tin, lithium-aluminum-tin, lithium-gallium, and Wood's alloys). Examples thereof further include alloys capable of absorbing/releasing lithium, carbon materials (e.g., graphite, hard carbon, low-temperature calcined carbon, amorphous carbon, etc.), metal oxides such as lithium metal oxides (Li₄Ti₅O₁₂, etc.), and polyanion compounds. Above all, graphite is preferable for the reason that it has an operating potential extremely close to that of metallic lithium and is capable of achieving charge-discharge at a high operating voltage. As graphite, for example, it is preferable to use artificial graphite or natural graphite. In particular, graphite in which the surface of negative active material particles is modified using amorphous carbon or the like causes less gas generation during charging, and thus is more preferable.

Further, it is preferable that an electrode composite material layer constituting an electrode, such as the positive electrode or the negative electrode, has a thickness of not less than 20 µm and not more than 500µm. As a result, while maintaining sufficient energy density, the energy density can be prevented from becoming too small. Besides, the thickness of an electrode is expressed as the total of the thickness of the current collector and the thickness of the electrode composite material layer.

Examples of nonaqueous solvents contained in the nonaqueous electrolyte include cyclic carbonates such as propylene carbonate and ethylene carbonate; cyclic esters such as γ-butyrolactone and γ-valerolactone; linear carbonates such as dimethyl carbonate, diethyl carbonate, and methylethyl carbonate; linear esters such as methyl formate, methyl acetate, and methyl butyrate; tetrahydrofuran and derivatives thereof; ethers such as 1,3-dioxane, 1,4-dioxane, 1,2-dimethoxyethane, 1,4-dibutoxyethane, and methyl diglyme; nitriles such as acetonitrile and benzonitrile; dioxolane and derivatives thereof; and ethylene sulfide, sulfolane, sultone, and derivatives thereof. The nonaqueous solvent may be, but is not limited to, one single kind or a mixture of two or more kinds of them.

Examples of electrolyte salts contained in the nonaqueous electrolyte include ionic compounds such as LiBF₄ and LiPF₆. As the electrolyte salt, one single kind or a mixture of two or more kinds of these ionic compounds may be used.

The concentration of the electrolyte salt in the nonaqueous electrolyte is preferably not less than 0.5 mol/l and not more than 5 mol/l, and still more preferably not less than 1 mol/l and not more than 2.5 mol/l. As a result, a nonaqueous electrolyte battery having high battery characteristics can be reliably obtained.

Examples of materials for the separator include polyolefin-based resins typified by polyethylene, polypropylene, and the like, polyester-based resins typified by polyethylene terephthalate, polybutylene terephthalate, and the like, polyimide, polyvinylidene fluoride, and vinylidene fluoride-hexafluoropropylene copolymers.

Examples of materials for the exterior body include nickel-plated iron, stainless steel, aluminum, metal-resin composite films, and glass.

The lithium secondary battery of this embodiment can be produced by a conventionally known ordinary method.

The positive electrode for a lithium secondary battery and lithium secondary battery of this embodiment are as illustrated above. However, the present invention is not limited to the positive electrode for a lithium secondary battery and lithium secondary battery illustrated above.

That is, various aspects used in an ordinary positive electrode for a lithium secondary battery and a lithium secondary battery can be adopted to the extent that the effects of the present invention are not impaired.

### EXAMPLES

Hereinafter, the present invention will be described in further detail with reference to examples. However, the present invention is not limited to the following embodiments.

### (Example 1)

As described below, a positive active material of the following composition was produced, and a positive electrode for a lithium secondary battery was produced using the positive active material.

[LiMnₓFe₍₁₋ₓ₎PO₄ : LiₐNi_{0.5-y}Mn_{0.5-z}Co_{y+z}O₂ = 20 : 80]

### (Synthesis of LiMn_{0.8}Fe_{0.2}PO₄)

Manganese acetate tetrahydrate (Mn(CH₃COO)₂•4H₂O) (25 g) and 7.09 g of iron sulfate heptahydrate (FeSO₄•7H₂O) were dissolved in 125 ml of purified water to prepare a liquid mixture.

Meanwhile, a dilute phosphoric acid solution, which was obtained by diluting 14.55 g of phosphoric acid (H₃PO₄) having a purity of 85% with purified water to 70 ml, and an aqueous lithium hydroxide solution, which was obtained by dissolving 16.05 g of lithium hydroxide monohydrate (LiOH•H₂O) in 151 ml of purified water, were separately prepared.

Next, while stirring the liquid mixture of manganese acetate tetrahydrate and iron sulfate heptahydrate, the dilute phosphoric acid solution was added dropwise to the liquid mixture. Subsequently, the aqueous lithium hydroxide solution was similarly added dropwise thereto. Thus, a precursor solution was prepared.

Further, the precursor solution was heated and stirred on a 190°C hot stirrer for 1 hour. The precursor solution was cooled, and then filtrated. Further, the precipitate on the filter paper was vacuum-dried (100°C) to recover a precursor.

Sucrose (2.14 g) and a small amount of purified water were added to 10 g of the precursor to give a mixture of paste form. Wet milling was then performed for 15 minutes using a ball mill (ball diameter: 1 cm). The milled product obtained by milling was placed in a sagger made of alumina (outline dimension: 90 × 90 × 50 mm), and calcined under nitrogen gas flow (flow rate: 1.0 l/min) in an atmosphere-replacement-type calcining furnace (desktop vacuum gas replacement furnace KDF-75 manufactured by DENKEN CO., LTD.). The calcining temperature was 700°C, and the calcining time (duration of maintaining the calcining temperature) was 5 hours. Besides, the temperature rise rate was 5°C/min, while upon temperature reduction, the temperature was allowed to fall naturally.

As described above, particles of a positive active material for a lithium secondary battery, LiMn_{0.8}Fe_{0.2}PO₄, having carbon supported on the surface thereof were produced. The BET specific surface area of the particles of the positive active material was 34.6 m²/g. Further, by image analysis of the results of transmission electron microscope (TEM) observation, it was shown that the size of the obtained primary particles was about 100 nm. Further, the secondary particle size was about 10 µm. Besides, the carbon on the surface of the active material generated by the pyrolysis of the sucrose added before mixing in the ball mill.

### (Synthesis of LiNi_{0.33}Mn_{0.33}Co_{0.34}O₂)

First, 3.5 l of water was placed in a sealed reaction vessel. Next, a 32% aqueous sodium hydroxide solution was added to the water so that the water had a pH of 11.6, thereby preparing an aqueous solution. While stirring the pH-adjusted aqueous solution at a rotation rate of 1200 rpm using a stirrer equipped with a paddle-type stirring blade, the temperature of the aqueous solution in the reaction vessel was maintained at 50°C by an external heater. Further, argon gas was blown into the aqueous solution in the reaction vessel to remove dissolved oxygen in the aqueous solution.

Meanwhile, a raw material solution having manganese sulfate pentahydrate (0.585 mol/l), nickel sulfate hexahydrate (0.585 mol/l), cobalt sulfate heptahydrate (0.588 mol/l), and hydrazine monohydrate (0.0101 mol/l) dissolved therein was prepared.

Subsequently, while stirring the aqueous solution in the reaction vessel, the raw material solution was continuously added dropwise to the reaction vessel at a flow rate of 3.17 ml/min. At the same time, a 12 mol/l aqueous ammonia solution was added dropwise to the reaction vessel at a flow rate of 0.22 ml/min to initiate a synthesis reaction.

During the synthesis reaction, in order to maintain the pH of the aqueous solution in the reaction vessel at 11.4, a 32% aqueous sodium hydroxide solution was intermittently dropped thereinto. Further, in order to maintain the aqueous solution temperature in the reaction vessel at 50°C, the heater was intermittently controlled. Further, in order to create a reducing atmosphere inside the reaction vessel, argon gas was directly blown into the aqueous solution in the reaction vessel. Further, in order for the amount of the aqueous solution in the reaction vessel to be a constant amount of 3.5 1 at any time, slurry was removed out of the system using a flow pump.

Within 5 hours after 60 hours had elapsed since the initiation of the reaction, a slurry of a Ni-Mn-Co composite oxide, a crystallized reaction product, was collected. The collected slurry was washed with water, filtered, and dried at 80°C overnight to give a dry powder of a Ni-Mn-Co coprecipitated precursor.

The obtained Ni-Mn-Co coprecipitated precursor powder was mixed with a lithium hydroxide monohydrate powder that had been weighed so as to have a Li/(Ni + Mn + Co) = 1.02. A sagger made of alumina was placed with the mixture, and, using an electric furnace, the temperature was raised to 1000°C at a temperature rise rate of 100°C/hr under dry air flow. The temperature of 1000°C was maintained for 15 hr. Subsequently, it was cooled to 200°C at a cooling rate of 100°C/hr, and then allowed to cool.

As described above, particles of a positive active material for a lithium secondary battery, LiNi_{0.33}Mn_{0.33}Co_{0.34}O₂, were prepared. The particles of the compound had an average particle size (D₅₀) of 12.3 µm and a specific surface area of 1.0 m²/g.

### (Production of Positive Electrode)

The produced positive active materials were mixed in such a mass ratio that LiMn_{0.8}Fe_{0.2}PO₄ : LiNi_{0.33}Mn_{0.33}Co_{0.34}O₂ = 20 : 80 to prepare a mixed positive active material. Next, a paste for positive electrode containing the mixed positive active material, acetylene black as a conductive agent, and polyvinylidene fluoride (PVdF) as a binder in such a mass ratio that mixed positive active material : conductive agent : binder = 90 : 5 : 5 and also containing N-methyl-2-pyrrolidone (NMP) as a solvent was prepared. Then, the paste for positive electrode was applied to one side of an aluminum foil current collector with a thickness of 20 µm, dried, and then pressed. As a result, a positive electrode was produced. The thickness of a positive composite material layer after pressing was 50 µm, and the mass of the positive composite material layer was about 70 mg. To the positive electrode, a positive terminal made of aluminum was connected by ultrasonic welding.

### (Example 2)

[LiMnₓFe₍₁₋ₓ₎PO₄ : LiₐNi_{0.5-y}Mn_{0.5-z}Co_{y+z}O₂ = 10 : 90]

A positive electrode for a lithium secondary battery was produced in the same manner as in Example 1, except that in the production of the positive electrode, a positive active material obtained by mixing so that LiMn_{0.8}Fe_{0.2}PO4 : LiNi_{0.33}Mn_{0.33}Co_{0.34}O₂ = 10 : 90 was used.

### (Example 3)

[LiMnₓFe₍₁₋ₓ₎PO₄ : LiₐNi_{0.5-y}Mn_{0.5-z}Co_{y+z}O₂ = 30 : 70]

A positive electrode for a lithium secondary battery was produced in the same manner as in Example 1, except that in the production of the positive electrode, a positive active material obtained by mixing so that LiMn_{0.8}Fe_{0.2}PO₄ : LiNi_{0.33}Mn_{0.33}Co_{0.34}O₂ = 30 : 70 was used.

### (Example 4)

[LiMnₓFe₍₁₋ₓ₎PO₄ : LiₐNi_{0.5-y}Mn_{0.5-z}Co_{y+z}O₂ = 50 : 50]

A positive electrode for a lithium secondary battery was produced in the same manner as in Example 1, except that in the production of the positive electrode, a positive active material obtained by mixing so that LiMn_{0.8}Fe_{0.2}PO4 : LiNi_{0.33}Mn_{0.33}Co_{0.34}O₂ = 50 : 50 was used.

### (Example 5)

[LiMnₓFe₍₁₋ₓ₎PO₄ : LiₐNi_{0.5-y}Mn_{0.5-z}Co_{y+z}O₂ = 70 : 30]

A positive electrode for a lithium secondary battery was produced in the same manner as in Example 1, except that in the production of the positive electrode, a positive active material obtained by mixing so that LiMn_{0.8}Fe_{0.2}PO₄ : LiNi_{0.33}Mn_{0.33}Co_{0.34}O₂ = 70 : 30 was used.

### (Example 6)

[LiMnₓFe₍₁₋ₓ₎PO₄ : LiₐNi_{0.5-y}Mn_{0.5-z}Co_{y+z}O₂ = 80 : 20]

A positive electrode for a lithium secondary battery was produced in the same manner as in Example 1, except that in the production of the positive electrode, a positive active material obtained by mixing so that LiMn_{0.8}Fe_{0.2}PO₄ : LiNi_{0.33}Mn_{0.33}Co_{0.34}O₂ = 80 : 20 was used.

### (Comparative Example 1)

[LiMnₓFe₍₁₋ₓ₎PO₄ : LiₐNi_{0.5-y}Mn_{0.5-z}Co_{y+z}O₂ = 0 : 100]

A positive electrode for a lithium secondary battery was produced in the same manner as in Example 1, except that in the production of the positive electrode, only LiNi_{0.33}Mn_{0.33}Co_{0.34}O₂ was used as a positive active material.

### (Comparative Example 2)

[LiMnₓFe₍₁₋ₓ₎PO₄ : LiₐNi_{0.5-y}Mn_{0.5-z}Co_{y+z}O₂ = 100 : 0]

A positive electrode for a lithium secondary battery was produced in the same manner as in Example 1, except that in the production of the positive electrode, only LiMn_{0.8}Fe_{0.2}PO₄ was used as a positive active material.

### (Example 7)

[LiMnₓFe₍₁₋ₓ₎PO₄ : LiₐNi_{0.5-y}Mn_{0.5-z}Co_{y+z}O₂ = 50 : 50]

### (Synthesis of LiMn_{0.8}Fe_{0.2}PO₄)

Manganese sulfate pentahydrate (MnSO₄•5H₂O), iron sulfate heptahydrate (FeSO₄•7H₂O), and ascorbic acid, which had been weighed so as to have a molar ratio of 8 : 2 : 0.025, were dissolved in purified water to prepare a solution A.

Meanwhile, diammonium hydrogen phosphate ((NH₄)₂HPO₄) and lithium hydroxide monohydrate (LiOH•H₂O), which had been weighed in a molar ratio of 10 : 20, were dissolved in purified water to prepare a solution B.

Next, the solution A and the solution B were mixed to prepare a precursor solution. The precursor solution was transferred to a reaction vessel made of polytetrafluoroethylene. Besides, the operations so far were performed in a nitrogen box.

Subsequently, the reaction vessel containing the precursor solution was set in a hydrothermal reactor (portable reactor, model TPR-1, manufactured by Taiatsu Techno), and the atmosphere in the vessel was replaced by nitrogen. Subsequently, the precursor solution was subjected to synthesis by a hydrothermal reaction at 170°C for 15 hours (hydrothermal method). During the hydrothermal reaction, stirring was performed in the vessel at a rotation rate of 100 rpm.

Then, the product of the hydrothermal reaction was filtrated, washed, and vacuum-dried to give LiMn_{0.8}Fe_{0.2}PO₄.

The obtained LiMn_{0.8}Fe_{0.2}PO₄ and polyvinyl alcohol (PVA) (polymerization degree: about 1500) were weighed so as to have a mass ratio of 1 : 1.14. Subsequently, they were dry-mixed in a ball mill (planetary mill manufactured by Fritsch Japan Co., Ltd., ball diameter: 1 cm). The mixture obtained by mixing was placed in a sagger made of alumina (outline dimension: 90 × 90 × 50 mm), and calcined under nitrogen flow (1.0 l/min) in an atmosphere-replacement-type calcining furnace (desktop vacuum gas replacement furnace KDF-75 manufactured by DENKEN CO., LTD.). The calcining temperature was 700°C, and the calcining time (duration of maintaining the calcining temperature) was 5 hours. Besides, the temperature rise rate was 5°C/min, while upon temperature reduction, the temperature was allowed to fall naturally.

Thus, particles of LiMn_{0.8}Fe_{0.2}PO₄ having carbon supported on the surface thereof were produced. They were used as a positive active material.

### (Synthesis of LiNi_{0.165}Mn_{0.165}Co_{0.67}O₂)

LiNi_{0.165}Mn_{0.165}Co_{0.67}O₂ was synthesized in the same manner as in Example 1, except that in the production of the lithium-nickel-manganese-cobalt composite oxide, a raw material solution having manganese sulfate pentahydrate (0.290 mol/l), nickel sulfate hexahydrate (0.290 mol/l), cobalt sulfate heptahydrate (1.178 mol/l), and hydrazine monohydrate (0.0101 mol/l) dissolved therein was prepared.

### (Production of Positive Electrode)

A positive electrode was produced in the same manner as in Example 1, except that the respective produced positive active materials were mixed in such a mass ratio that LiMn_{0.8}Fe_{0.2}PO4 : LiNi_{0.165}Mn_{0.165}Co_{0.67}O₂ = 50 : 50.

### (Example 8)

[LiMnₓFe₍₁₋ₓ₎PO₄ : LiₐNi_{0.5-y}Mn_{0.5-z}Co_{y+z}O₂ = 50 : 50]

### (Synthesis of LiNi_{0.45}Mn_{0.45}Co_{0.10}O₂)

LiNi_{0.45}Mn_{0.45}Co_{0.10}O₂ was synthesized in the same manner as in Example 1, except that in the production of the lithium-nickel-manganese-cobalt composite oxide, a raw material solution having manganese sulfate pentahydrate (0.791 mol/l), nickel sulfate hexahydrate (0.791 mol/l), cobalt sulfate heptahydrate (0.176 mol/l), and hydrazine monohydrate (0.0101 mol/l) dissolved therein was prepared.

Then, a positive electrode was produced in the same manner as in Example 1, except that the positive active material LiMn_{0.8}Fe_{0.2}PO₄ produced in Example 7 was used as lithium manganese iron phosphate, and that LiMn_{0.8}Fe_{0.2}PO₄ and LiNi_{0.45}Mn_{0.45}Co_{0.10}O₂ were mixed in a mass ratio of 50 : 50.

### (Example 9)

[LiMnₓFe₍₁₋ₓ₎PO₄ : LiₐNi_{0.5-y}Mn_{0.5-z}Co_{y+z}O₂ = 50 : 50]

### (Synthesis of LiMn_{0.95}Fe_{0.05}PO₄)

LiMn_{0.95}Fe_{0.05}PO₄ was synthesized in the same manner as in Example 7, except that in the production of the lithium manganese iron phosphate, materials were weighed so as to have such a molar ratio that MnSO₄•5H₂O : FeSO₄•7H₂O : (NH₄)₂HPO₄ : LiOH•H₂O : ascorbic acid = 9.5 : 0.5 : 10 : 20 : 0.025.

Then, a positive electrode was produced in the same manner as in Example 1, except that the positive active material LiNi_{0.33}Mn_{0.33}Co_{0.34}O₂ produced in Example 1 was used as a lithium-nickel-manganese-cobalt composite oxide, and that LiMn_{0.95}Fe_{0.05}PO₄ and LiNi_{0.33}Mn_{0.33}Co_{0.34}O₂ were mixed in a mass ratio of 50 : 50.

### (Example 10)

[LiMnₓFe₍₁₋ₓ₎PO₄ : LiₐNi_{0.5-y}Mn_{0.5-z}Co_{y+z}O₂ = 50 : 50]

### (Synthesis of LiMn_{0.55}Fe_{0.45}PO₄)

LiMn_{0.55}Fe_{0.45}PO₄ was synthesized in the same manner as in Example 7, except that in the production of the lithium manganese iron phosphate, materials were weighed so as to have such a molar ratio that MnSO₄•5H₂O : FeSO₄•7H₂O : (NH₄)₂HPO₄ : LiOH•H₂O : ascorbic acid = 5.5 : 4.5 : 10 : 20 : 0.025.

Then, a positive electrode was produced in the same manner as in Example 1, except that the positive active material LiNi_{0.33}Mn_{0.33}Co_{0.34}O₂ produced in Example 1 was used as a lithium-nickel-manganese-cobalt composite oxide, and that LiMn_{0.55}Fe_{0.45}PO₄ and LiNi_{0.33}Mn_{0.33}Co_{0.34}O₂ were mixed in a mass ratio of 50 : 50.

### (Comparative Example 3)

[LiMnₓFe₍₁₋ₓ₎PO₄ : LiₐNi_{0.5-y}Mn_{0.5-z}Co_{y+z}O₂ = 100 : 0]

A positive electrode for a lithium secondary battery was produced in the same manner as in Example 1, except that in the production of the positive electrode, only LiMn_{0.8}Fe_{0.2}PO₄ used in Example 7 was used as a positive active material.

### (Comparative Example 4)

[LiMnₓFe₍₁₋ₓ₎PO₄ : LiₐNi_{0.5-y}Mn_{0.5-z}Co_{y+z}O₂ = 100 : 0]

A positive electrode for a lithium secondary battery was produced in the same manner as in Example 1, except that in the production of the positive electrode, only LiMn_{0.95}Fe_{0.05}PO₄ used in Example 9 was used as a positive active material.

### (Comparative Example 5)

[LiMnₓFe₍₁₋ₓ₎PO₄ : LiₐNi_{0.5-y}Mn_{0.5-z}Co_{y+z}O₂ = 100 : 0]

A positive electrode for a lithium secondary battery was produced in the same manner as in Example 1, except that in the production of the positive electrode, only LiMn_{0.55}Fe_{0.45}PO₄ used in Example 10 was used as a positive active material.

### (Comparative Example 6)

[LiMnₓFe₍₁₋ₓ₎PO₄ : LiₐNi_{0.5-y}Mn_{0.5-z}Co_{y+z}O₂ = 0 : 100]

A positive electrode for a lithium secondary battery was produced in the same manner as in Example 1, except that in the production of the positive electrode, only LiNi_{0.165}Mn_{0.165}Co_{0.67}O₂ used in Example 7 was used as a positive active material.

### (Comparative Example 7)

[LiMnₓFe₍₁₋ₓ₎PO₄ : LiₐNi_{0.5-y}Mn_{0.5-z}Co_{y+z}O₂ = 0 : 100]

A positive electrode for a lithium secondary battery was produced in the same manner as in Example 1, except that in the production of the positive electrode, only LiNi_{0.45}Mn_{0.45}Co_{0.10}O₂ used in Example 8 was used as a positive active material.

### (Production of Negative Electrode)

A metal lithium foil with a thickness of 100 µm was attached onto a nickel foil current collector with a thickness of 10 µm to produce a negative electrode. Further, a negative electrode terminal made of nickel was connected to the negative electrode by resistance welding.

### (Preparation of Nonaqueous Electrolyte)

LiPF₆ as a fluorine-containing electrolyte salt was dissolved in a concentration of 1 mol/l in a mixed nonaqueous solvent having ethylene carbonate, dimethyl carbonate, and methylethyl carbonate mixed in a volume ratio of 1 : 1 : 1, thereby preparing a nonaqueous electrolyte. Besides, the nonaqueous electrolyte was prepared so that the moisture content in the nonaqueous electrolyte was less than 50 ppm.

### (Assembly of Battery)

Using the positive electrode of each of the examples and comparative examples, a lithium secondary battery was assembled by the following procedure in a dry atmosphere having a dew point of not more than -40°C.

That is, one positive electrode, which had been subjected to vacuum drying at 150°C to have a moisture content of not more than 500 ppm (measured by Karl Fischer's method), and one negative electrode were arranged to face each other via a separator with a thickness of 20 µm made of polypropylene. Further, as an exterior body, a metal-resin composite film made of polyethylene terephthalate (15 µm)/an aluminum foil (50 µm)/a metal adhesive polypropylene film (50 µm) was used. The electrode group formed of the positive electrode, the negative electrode, and the separator was sealed (hermetically) by the exterior body in such a manner that the open ends of the positive terminal and negative terminal were exposed to the outside. However, the sealed portion was a portion other than the portion to serve as an filling inlet for electrolyte. After nonaqueous electrolyte filling was performed through the filling inlet using a certain amount of the nonaqueous electrolyte, the filling inlet portion was thermally sealed under reduced pressure; a battery was thus assembled.

### <Charge-Discharge Test>

The lithium secondary battery of each of the example and comparative examples was subjected to a charge-discharge process, in which charge-discharge was performed under two temperature cycles at 20°C. Charge was constant current constant voltage charge at a current of 0.1 ItmA (about 10 hours rate) and a voltage of 4.3 V for 15 hours. Further, discharge was constant current discharge at a current of 0.1 ItmA (about 10 hours rate) and a discharge end voltage of 2.5 V.

With respect to lithium secondary batteries using the positive electrodes of Examples 1 to 6 and Comparative Examples 1 and 2, Table 1 shows the results of the initial coulombic efficiency (discharge capacity/charge capacity) obtained in the first cycle .

**[Table 1]**

| | LiMn_{0.8}Fe_{0.2}PO₄ : LiNi_{0.33}Mn_{0.33}Co_{0.34}O₂ | Initial Coulombic Efficiency |
|---|---|---|
| Comparative Example 1 | 0 : 100 | 87.6% |
| Example 2 | 10 : 90 | 88.3% |
| Example 1 | 20 : 80 | 89.1% |
| Example 3 | 30 : 70 | 89.0% |
| Example 4 | 50 : 50 | 89.4% |
| Example 5 | 70 : 30 | 88.7% |
| Example 6 | 80 : 20 | 86.0% |
| Comparative Example 2 | 100 : 0 | 85.0% |

As can be understood from Table 1, the initial coulombic efficiency in Examples 1 to 5 is higher compared with that in Comparative Examples 1 and 2 and in Example 6 is higher compared with that in Comparative Example 2. These results show that when a positive active material containing lithium manganese iron phosphate and a lithium-nickel-manganese-cobalt composite oxide is used, the initial coulombic efficiency is improved compared with the case where each is used alone.

Further, as can be understood from Table 1, when the lithium manganese iron phosphate and the lithium-nickel-manganese-cobalt composite oxide in the positive active material are in a mass ratio of 10 : 90 to 70 : 30, the initial coulombic efficiency is higher than in the case of other ratios. These results show that when the mass of lithium manganese iron phosphate contained in the positive electrode is not less than 10% and not more than 70% relative to the mass of the total of lithium manganese iron phosphate and a lithium-nickel-manganese-cobalt composite oxide, the initial coulombic efficiency is further improved.

With respect to lithium secondary batteries using the positive electrodes of Examples 7 to 10 and Comparative Examples 3 to 7, Table 2 shows the results of the measurement of initial coulombic efficiency (discharge capacity/charge capacity) performed in the same manner as above.

**[Table 2]**

| | | Initial Coulombic Efficiency |
|---|---|---|
| Example 7 | LiMn_{0.8}Fe_{0.2}PO₄ : LiNi_{0.165}Mn_{0.165}Co_{0.67}O₂ = 50 : 50 | 92.3% |
| Example 8 | LiMn_{0.8}Fe_{0.2}PO₄ : LiNi_{0.45}Mn_{0.45}Co_{0.10}O₂ = 50 : 50 | 90.0% |
| Example 9 | LiMn_{0.95}Fe_{0.05}PO₄ : LiNi_{0.33}Mn_{0.33}Co_{0.34}O₂ = 50 : 50 | 86.0% |
| Example 10 | LiMn_{0.55}Fe_{0.45}PO₄ : LiNi_{0.33}Mn_{0.33}Co_{0.34}O₂ = 50 : 50 | 90.8% |
| Comparative Example 3 | LiMn_{0.8}Fe_{0.2}PO₄ | 85.0% |
| Comparative Example 4 | LiMn_{0.95}Fe_{0.05}PO₄ | 61.4% |
| Comparative Example 5 | LiMn_{0.55}Fe_{0.45}PO₄ | 89.8% |
| Comparative Example 6 | LiNi_{0.165}Mn_{0.165}Co_{0.67}O₂ | 92.7% |
| Comparative Example 7 | LiNi_{0.45}Mn_{0.45}Co_{0.10}O₂ | 87.4% |

In Table 2, as compared with the results of Comparative Example 3 and Comparative Example 6, the result of Example 7 is beyond prediction. That is, in Comparative Example 3 and Comparative Example 6 where lithium manganese iron phosphate or a lithium-nickel-manganese-cobalt composite oxide was used alone, the initial coulombic efficiency was 85.0% and 92.7%, respectively. Therefore, in Example 7 where lithium manganese iron phosphate and a lithium-nickel-manganese-cobalt composite oxide were mixed in 50 : 50, the initial coulombic efficiency is expected to be about 89%. However, the initial coulombic efficiency in Example 7 was 92.3%, which is far beyond the prediction. In addition, in Example 7, the lithium manganese iron phosphate and the lithium-nickel-manganese-cobalt composite oxide are mixed. Accordingly, the lithium secondary battery using the positive electrode of Example 7 has higher safety than those using a lithium-nickel-manganese-cobalt composite oxide alone as in Comparative Example 6.

For the same reason, as compared with the results of Comparative Example 4 and Comparative Example 1, the result of Example 9 is also beyond prediction. Further, the lithium secondary battery using the positive electrode of Example 9 has relatively high safety for the same reason as mentioned above.

In a lithium secondary battery with improved initial coulombic efficiency, the amount of negative active material can be reduced in proportion to the improvement of the initial coulombic efficiency. Therefore, a lithium secondary battery with relatively high initial coulombic efficiency can be expected to have relatively high energy density.

### INDUSTRIAL APPLICABILITY

The positive electrode for a lithium secondary battery according to the present invention makes it possible to allow a lithium secondary battery to have excellent initial coulombic efficiency. Therefore, use of the positive electrode for a lithium secondary battery according to the present invention is expected to enable the provision of a lithium secondary battery having relatively high energy density.

A lithium secondary battery having the positive electrode for a lithium secondary battery according to the present invention is particularly suitable for application to the fields of, for example, industrial batteries for electric vehicles, where higher capacity is required and demand is expected to grow in the future. Therefore, the industrial applicability of this lithium secondary battery is extremely great.

## Claims

1. A positive electrode for a lithium secondary battery, comprising lithium manganese iron phosphate and
a lithium-nickel-manganese-cobalt composite oxide;
**characterized in that**
an average particle size of particles of the lithium manganese iron phosphate is smaller than an average particle size of particles of the lithium-nickel-manganese-cobalt composite oxide,
the number of manganese atoms contained in the lithium manganese iron phosphate is more than 50% and less than 100% relative to the total number of manganese atoms and iron atoms, and
the number of cobalt atoms contained in the lithium-nickel-manganese-cobalt composite oxide is more than 0% and not more than 67% relative to the total number of nickel atoms, manganese atoms, and cobalt atoms.

2. The positive electrode for a lithium secondary battery according to claim 1, wherein the mass ratio (A : B) between the lithium manganese iron phosphate (A) and the lithium-nickel-manganese-cobalt composite oxide (B) is 10 : 90 to 70 : 30.

3. The positive electrode for a lithium secondary battery according to claim 1 or 2, wherein an average particle size of secondary particles of the lithium manganese iron phosphate is 0.1 µm to 20 µm.

4. The positive electrode for a lithium secondary battery from claims 1 to 3, wherein an average particle size of secondary particles of the lithium-nickel-manganese-cobalt composite oxide is 0.1 µm to 100 µm.

5. The positive electrode for a lithium secondary battery from claims 1 to 4, wherein an average particle size of primary particles of the lithium manganese iron phosphate is 1 nm to 500 nm.

6. The positive electrode for a lithium secondary battery from claims 1 to 5, wherein a BET specific area of particles of the lithium-nickel-manganese-cobalt composite oxide is 1 to 10 m²/g.

7. The positive electrode for a lithium secondary battery from claims 1 to 6, wherein a BET specific surface area of particles of the lithium manganese iron phosphate is 1 to 100 m²/g.

8. A lithium secondary battery comprising the positive electrode for a lithium secondary battery according to any one of claims 1 to 7, a negative electrode, and a nonaqueous electrolyte.

## Patentansprüche

1. Positive Elektrode für eine Lithium-Sekundärbatterie, die Lithium-Mangan-Eisenphosphat und
ein Lithium-Nickel-Mangan-Kobalt-Mischoxid enthält, **dadurch gekennzeichnet, dass**
eine durchschnittliche Partikelgröße von Partikeln des Lithium-Mangan-Eisenphosphats kleiner ist als eine durchschnittliche Partikelgröße von Partikeln des Lithium-Nickel-Mangan-Kobalt-Mischoxids,
die Anzahl von Manganatomen, die in dem Lithium-Mangan-Eisenphosphat enthalten sind, mehr als 50 % und weniger als 100 % relativ zu der Gesamtanzahl von Manganatomen und Eisenatomen beträgt und
die Anzahl von Kobaltatomen, die in dem Lithium-Nickel-Mangan-Kobalt-Mischoxid enthalten sind, mehr als 0 % und nicht mehr als 67 % relativ zu der Gesamtanzahl von Nickelatomen, Manganatomen und Kobaltatomen beträgt.

2. Positive Elektrode für eine Lithium-Sekundärbatterie nach Anspruch 1, wobei das Massenverhältnis (A:B) zwischen dem Lithium-Mangan-Eisenphosphat (A) und dem Lithium-Nickel-Mangan-Kobalt-Mischoxid (B) 10:90 bis 70:30 beträgt.

3. Positive Elektrode für eine Lithium-Sekundärbatterie nach Anspruch 1 oder 2, wobei eine durchschnittliche Partikelgröße von sekundären Partikeln des Lithium-Mangan-Eisenphosphats 0,1 µm bis 20 µm beträgt.

4. Positive Elektrode für eine Lithium-Sekundärbatterie nach einem der Ansprüche 1 bis 3, wobei eine durchschnittliche Partikelgröße von sekundären Partikeln des Lithium-Nickel-Mangan-Kobalt-Mischoxids 0,1 µm bis 100 µm beträgt.

5. Positive Elektrode für eine Lithium-Sekundärbatterie nach einem der Ansprüche 1 bis 4, wobei eine durchschnittliche Partikelgröße von primären Partikeln des Lithium-Mangan-Eisenphosphats 1 nm bis 500 nm beträgt.

6. Positive Elektrode für eine Lithium-Sekundärbatterie nach einem der Ansprüche 1 bis 5, wobei ein spezifischer BET-Bereich von Partikeln des Lithium-Nickel-Mangan-Kobalt-Mischoxids 1 bis 10 m²/g beträgt.

7. Positive Elektrode für eine Lithium-Sekundärbatterie nach einem der Ansprüche 1 bis 6, wobei ein spezifischer BET-Flächenbereich von Partikeln des Lithium-Mangan-Eisenphosphats 1 bis 100 m²/g beträgt.

8. Lithium-Sekundärbatterie, welche die positive Elektrode für eine Lithium-Sekundärbatterie nach einem der Ansprüche 1 bis 7, eine negative Elektrode und einen nichtwässrigen Elektrolyten umfasst.

## Revendications

1. Électrode positive pour une batterie secondaire au lithium, comprenant du phosphate de lithium, de manganèse et de fer et
un oxyde composite de lithium-nickel-manganèse-cobalt ; **caractérisée en ce**
**qu'**une taille moyenne des particules du phosphate de lithium, de manganèse et de fer est inférieure à une taille moyenne des particules de l'oxyde composite de lithium-nickel-manganèse-cobalt,
**que** le nombre d'atomes de manganèse contenus dans le phosphate de lithium, de manganèse et de fer est supérieur à 50 % et inférieur à 100 % par rapport au nombre total d'atomes de manganèse et d'atomes de fer, et
**que** le nombre d'atomes de cobalt contenus dans l'oxyde composite de lithium-nickel-manganèse-cobalt est supérieur à 0 % et inférieur ou égal à 67 % par rapport au nombre total d'atomes de nickel, d'atomes de manganèse et d'atomes de cobalt.

2. Électrode positive pour une batterie secondaire au lithium selon la revendication 1, dans laquelle le rapport de masse (A:B) entre le phosphate de lithium, de manganèse et de fer (A) et l'oxyde composite de lithium-nickel-manganèse-cobalt (B) est de 10:90 à 70:30.

3. Électrode positive pour une batterie secondaire au lithium selon la revendication 1 ou 2, dans laquelle une taille moyenne des particules secondaires du phosphate de lithium, de manganèse et de fer est de 0,1 µm à 20 pm.

4. Électrode positive pour une batterie secondaire au lithium selon les revendications 1 à 4, dans laquelle une taille moyenne des particules secondaires de l'oxyde composite de lithium-nickel-manganèse-cobalt est de 0,1 µm à 100 µm.

5. Électrode positive pour une batterie secondaire au lithium selon les revendications 1 à 4, dans laquelle une taille moyenne des particules primaires du phosphate de lithium, de manganèse et de fer est de 1 nm à 500 nm.

6. Électrode positive pour une batterie secondaire au lithium selon les revendications 1 à 5, dans laquelle une surface spécifique BET de particules de l'oxyde composite de lithium-nickel-manganèse-cobalt est de 1 à 10 m²/g.

7. Électrode positive pour une batterie secondaire au lithium selon les revendications 1 à 6, dans laquelle une surface spécifique BET de particules du phosphate de lithium, de manganèse et de fer est de 1 à 100 m²/g.

8. Batterie secondaire au lithium comprenant l'électrode positive pour batterie secondaire au lithium selon l'une quelconque des revendications 1 à 7, une électrode négative et un électrolyte non aqueux.
